# EUROPEAN PATENT APPLICATION

(11) **EP 3 473 559 A1**
(43) Date of publication of application: **24.04.2019**
(21) Application number: 16906354.2
(22) Date of filing: 17.11.2016
(51) Int. Cl.: B65D 19/02, B65D 81/24, B65D 85/50

(54) **RUST-PROOF STORAGE CONTAINER**

(30) Priority: 20.06.2016 JP 2016121706
(71) Applicant: IHI Corporation, Tokyo 135-8710 (JP)
(72) Inventor: UCHIMURA Mitsutaka, Tokyo 135-8710 (JP); AKAMINE Kenichi, Tokyo 135-8710 (JP); FUKUOKA Mari, Tokyo 135-8710 (JP)
(74) Representative: MERH-IP Matias Erny Reichl Hoffmann Patentanwälte PartG mbB
(86) International application number: PCT/JP2016/084144
(87) International publication number: WO 2017/221438

(57) **Abstract**

A rust-proof storage container includes a container body defining a storage space and a barrier material provided so as to seal a passage or an opening of the container body and having an area greater than a cross-sectional area of the passage or an area of the opening, the barrier material being sheet-like and having flexibility. A peripheral portion of the barrier material is fixed all around a periphery of the passage or a periphery of the opening and airtightness of the storage space is maintained by the barrier material. A center portion of the barrier material includes a first surface being a surface facing the storage space and receiving a first atmospheric pressure of the storage space and a second surface being a surface opposite the first surface and receiving a second atmospheric pressure of an outer space.

## Description

### Technical Field

The present disclosure relates to a rust-proof storage container.

### Background Art

Storage containers that can inhibit corrosion (rust formation) of items such as metal materials and metal products are known (for example, Patent Literatures 1 and 2). A container disclosed in Patent Literature 1 includes opposing upper and lower containers with a pocket, or a space, formed therebetween. The pocket accommodates a mold, which is a metal material to be stored, and a deoxidizer. The upper container includes a gas port that has a pressure-regulating valve. A structure disclosed in Patent Literature 2 is a palette type storage structure and includes a frame and a hood (cover) that covers the frame. The frame has a gas composition adjustment mechanism attached to the center inside the frame. The gas composition adjustment mechanism includes a gas separation membrane which has the property of separating water from the air, and adjusts the humidity atmosphere inside the frame.

### Citation List

### Patent Literature

Patent Literature 1: Japanese Unexamined Patent Publication No. H6-8981
Patent Literature 2: Japanese Unexamined Patent Publication No. H8-21112

### Summary of Invention

### Technical Problem

The conventional storage containers described above tend to have complex configurations. There have also been storage methods in which a rust preventive oil is applied to a metal material or the like, and the metal material is wrapped with a plastic sheet. However, in these method, the task of applying the rust preventive oil is laborious and the rust preventive oil needs to be removed when using the metal material. Rust preventive oils have fixed shelf lives, after which they must be reapplied. Thus, maintainability is not very good because of the need for such rust-proof treatments.

The present disclosure describes a rust-proof storage container which has a simplified configuration and has improved maintainability.

### Solution to Problem

A rust-proof storage container according to an embodiment of the present disclosure includes a container body that defines a storage space and has a passage or an opening between the storage space and an outer space, and a barrier material that is provided so as to seal the passage or the opening and has an area greater than a cross-sectional area of the passage or an area of the opening, the barrier material being sheet-like and having flexibility, wherein a peripheral portion of the barrier material is fixed all around a periphery of the passage or a periphery of the opening, and airtightness of the storage space is maintained by the barrier material, and wherein a center portion of the barrier material includes a first surface which is a surface that faces the storage space and receives a first atmospheric pressure of the storage space and a second surface which is a surface that is opposite the first surface and receives a second atmospheric pressure of the outer space.

### Effects of Invention

According to an embodiment of the present disclosure, a rust-proof storage container which has a simplified configuration and has improved maintainability is provided.

### Brief Description of Drawings

FIG. 1 is a perspective view showing a rust-proof storage container according to a first embodiment of the present disclosure.
FIG. 2 is an exploded perspective view of the rust-proof storage container of FIG. 1.
FIG. 3A is a cross-sectional view of the rust-proof storage container of

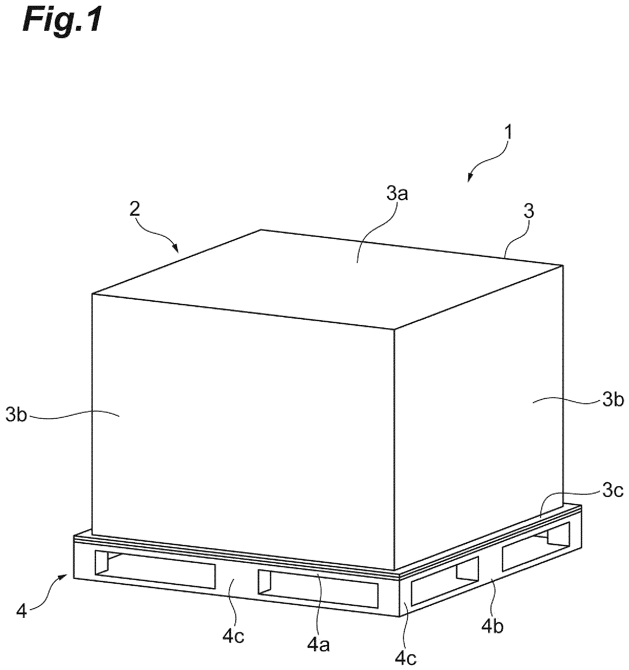

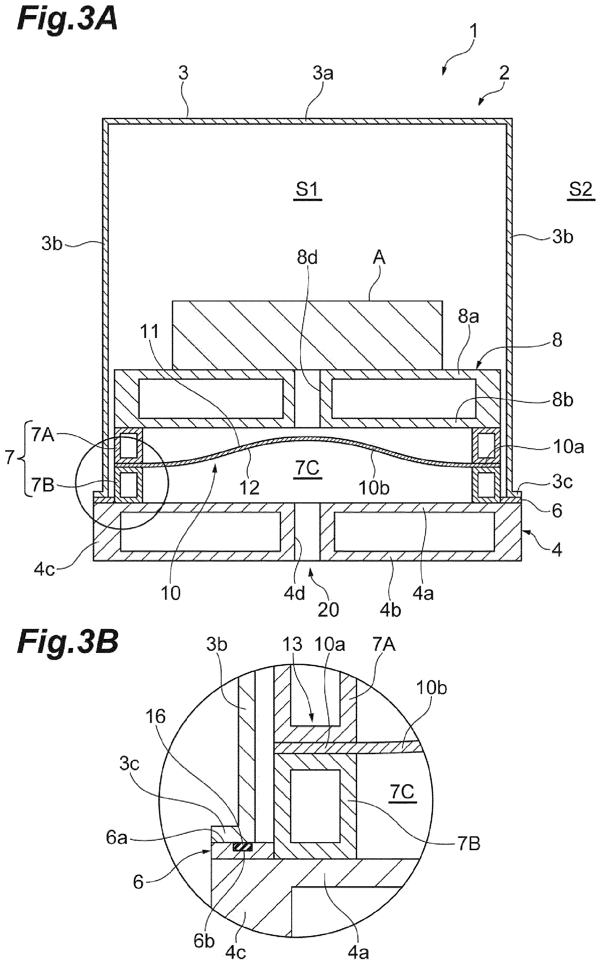

FIG. 1, and FIG. 3B is a partly enlarged view of FIG. 3A.

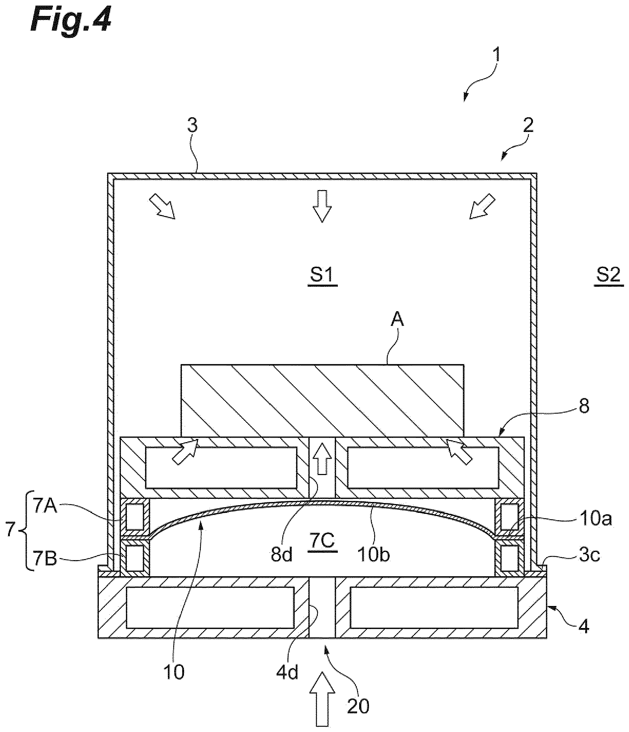

FIG. 4 is a cross-sectional view of the rust-proof storage container showing a barrier material when the temperature is low.

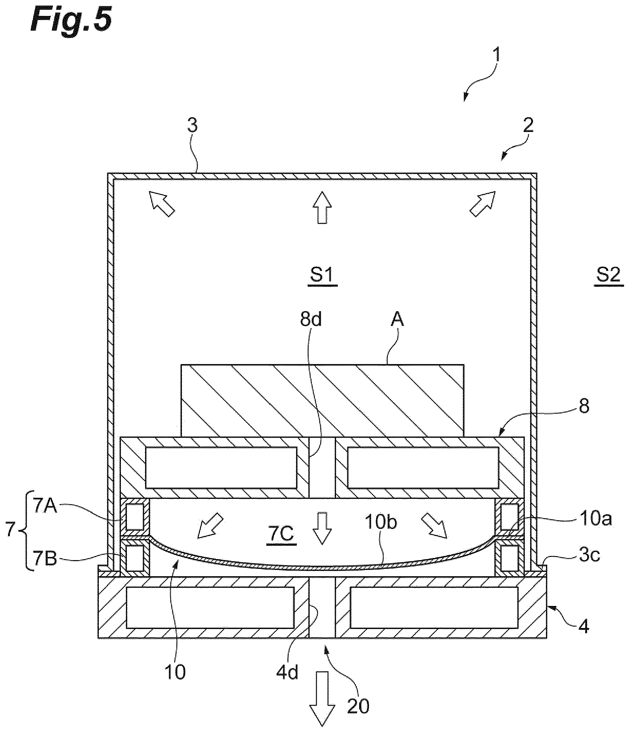

FIG. 5 is a cross-sectional view of the rust-proof storage container showing the barrier material when the temperature is high.

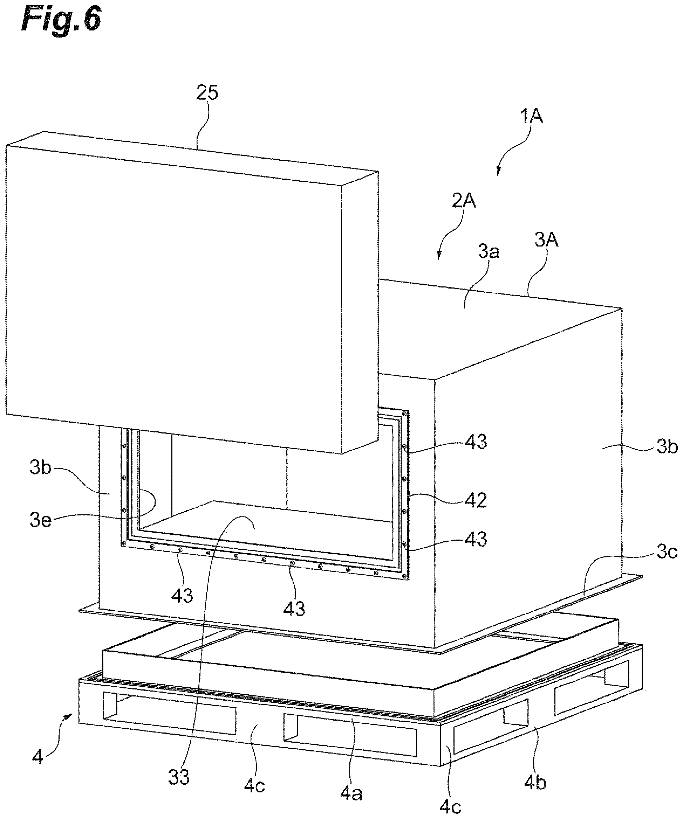

FIG. 6 is an exploded perspective view of a rust-proof storage container according to a second embodiment of the present disclosure.

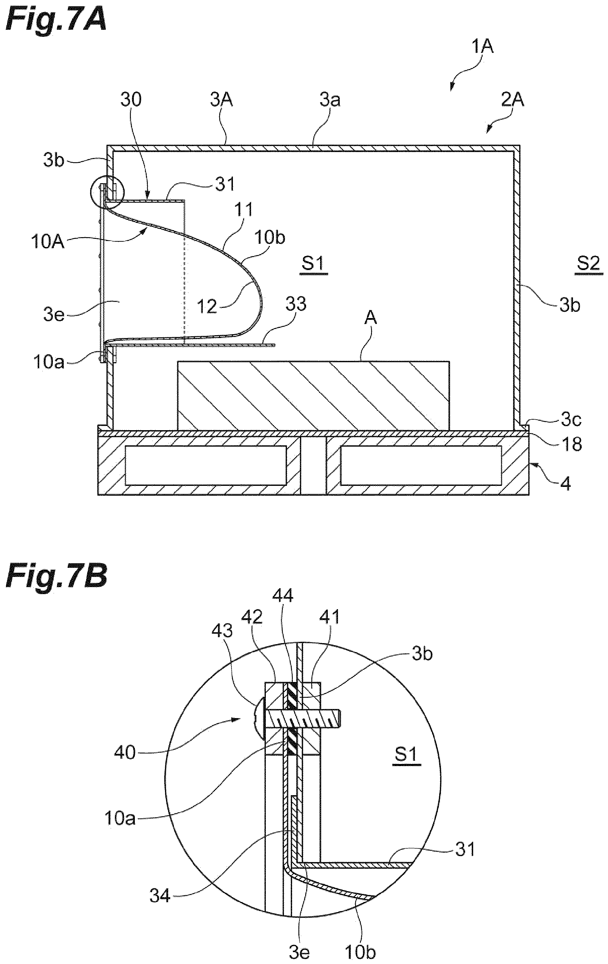

FIG. 7A is a cross-sectional view of the rust-proof storage container of
FIG. 6, and FIG. 7B is a partly enlarged view of FIG. 7A.

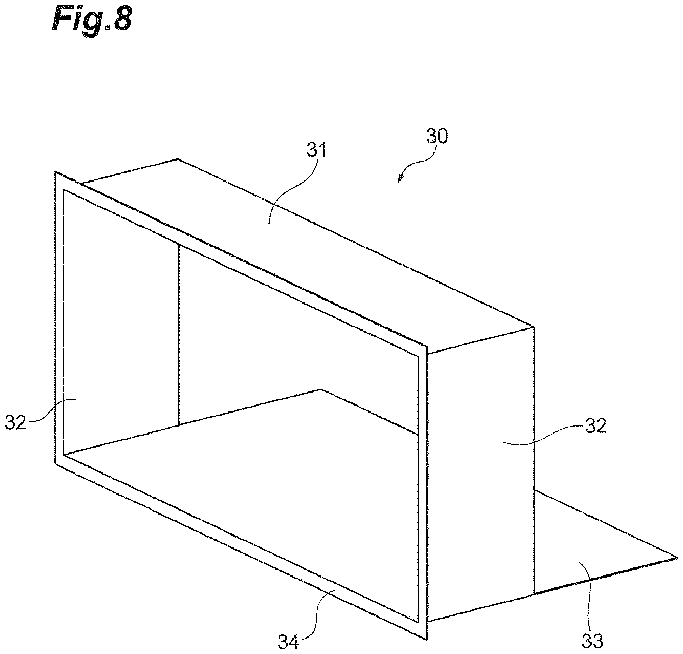

FIG. 8 is a perspective view of a box shown in FIG. 7A.

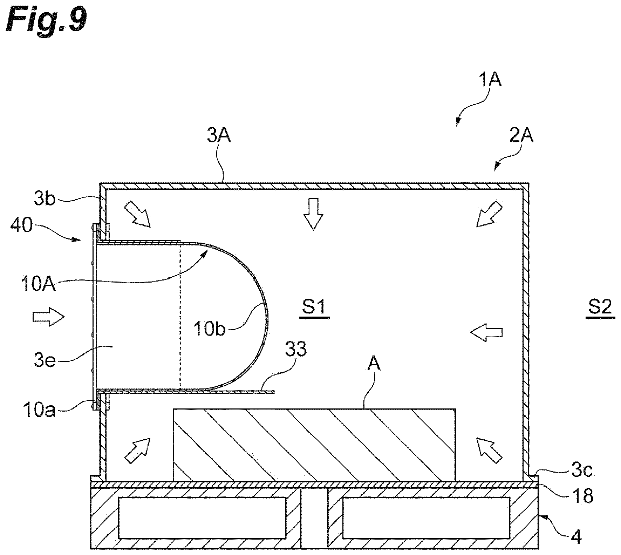

FIG. 9 is a cross-sectional view of the rust-proof storage container showing a barrier material when the temperature is low.

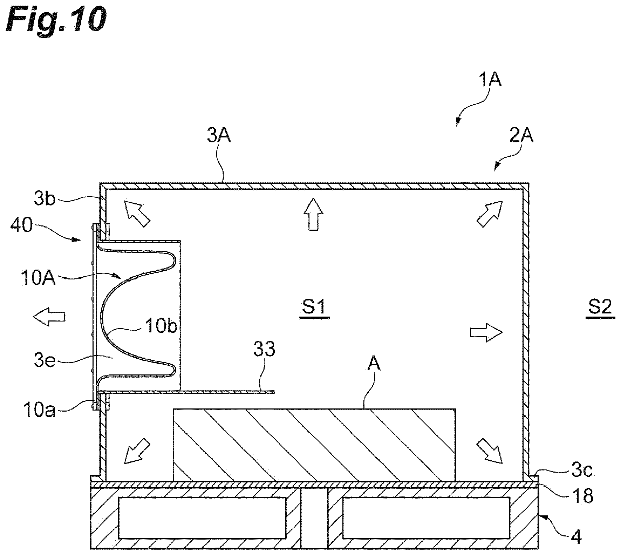

FIG. 10 is a cross-sectional view of the rust-proof storage container showing the barrier material when the temperature is high.

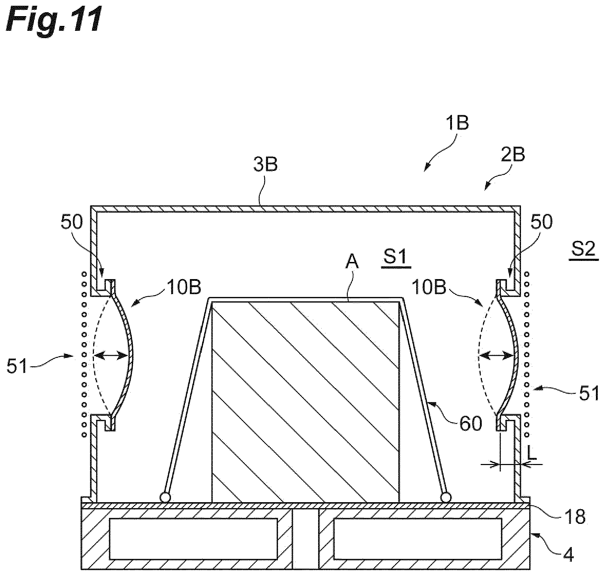

FIG. 11 is a cross-sectional view of a rust-proof storage container according to a third embodiment of the present disclosure.

### Description of Embodiments

A rust-proof storage container according to an embodiment of the present disclosure includes a container body that defines a storage space and has a passage or an opening between the storage space and an outer space, and a barrier material that is provided so as to seal the passage or the opening and has an area greater than a cross-sectional area of the passage or an area of the opening, the barrier material being sheet-like and having flexibility, wherein a peripheral portion of the barrier material is fixed all around a periphery of the passage or a periphery of the opening, and airtightness of the storage space is maintained by the barrier material, and wherein a center portion of the barrier material includes a first surface which is a surface that faces the storage space and receives a first atmospheric pressure of the storage space and a second surface which is a surface that is opposite the first surface and receives a second atmospheric pressure of the outer space.

According to this rust-proof storage container, an item to be stored such as a metal material or a metal product is stored in the storage space of the container body. The passage or the opening provided on the container body is sealed by the barrier material. The sheet-like barrier material is flexible and has an area greater than the cross-sectional area of the passage or the area of the opening, so that the center portion thereof is deformable within the passage or the opening. In other words, the center portion of the barrier material deforms in response to a pressure difference between the first atmospheric pressure and the second atmospheric pressure. The center portion is the area excluding the fixed peripheral portion. Deformation of the barrier material relieves the pressure difference. The relieved pressure difference helps, for example, to prevent inflow of moist air existing in the outer space into the inner storage space. This rust-proof storage container inhibits moisture infiltration so that it does not require rust-proof treatments such as applying a rust preventive oil to the metal material or the like. Thus, maintainability is improved. Moreover, gas tightness is achieved by providing the passage or the opening of the container body with the barrier material, so that the configuration of the rust-proof storage container is simplified. It should be noted that the rust-proof storage container may be effective not only for storing but also for transporting, for example, a metal material or a metal product.

In some embodiments, the container body includes a base facing the outer space, a lid provided on the base and defining the storage space, a mount provided on the base inside the lid and facing the storage space, and a frame provided between the base and the mount, wherein the passage of the container body is formed by communication between a through hole provided in the base, an inner space of the frame, and a through hole provided in the mount, and wherein the peripheral portion of the barrier material is retained by the frame and the center portion of the barrier material is disposed in the inner space of the frame.

According to these embodiments, the frame and the mount are provided on the base and the item to be stored such as a metal material or a metal product is placed on the mount. The passage that communicates the inside and the outside is formed in the base, the frame, and the mount, and the center portion of the barrier material is deformable in the inner space of the frame. To use the metal material or the like, the lid is opened, and the metal material is taken out. Thus, removal is facilitated. Furthermore, for example, if a top surface of the lid is flat, two or more of the rust-proof storage containers can be stacked to thereby help save space.

In some embodiments, the container body includes a base facing the outer space and the storage space, and a lid provided on the base and defining the storage space, wherein the passage or the opening of the container body is provided on at least one side of the lid, and wherein the peripheral portion of the barrier material is fixed to the at least one side of the lid, and the center portion of the barrier material is expanded toward the storage space inside the lid.

According to these embodiments, the passage or the opening is provided on at least one side of the lid. The center portion of the barrier material that expands toward the storage space is deformable inside the storage space. To use the metal material or the like, the lid is opened, and the metal material is taken out. Thus, removal is facilitated. Since the barrier material expands and contracts laterally, it is less prone to gravitational effects and thereby facilitates the relieving of the pressure difference described above. Since the barrier material is disposed inside the storage space, the barrier material may be large and the amount of deformation can be increased. Thus, the range of the pressure difference that can be relieved is increased. A bag-shaped barrier material may also be used. Furthermore, for example, if a top surface of the lid is flat, two or more of the rust-proof storage containers can be stacked to thereby help save space.

In some embodiments, the opening is provided on at least one side of the lid, and the periphery of the opening has fixed thereto a plate protruding toward the storage space from a lower side of the periphery.

According to these embodiments, the plate is capable of supporting the center portion of the barrier material that expands toward the storage space. In a case in which the plate is disposed between the metal material or the like and the barrier material, the plate prevents the barrier material from contacting the metal material or the like. In a case in which the passage or the opening is provided on the side of the lid, the plate contributes to appropriate deformation of the barrier material.

In some embodiments, the container body includes a base facing the outer space and the storage space, and a lid provided on the base and defining the storage space, wherein an opening frame is provided on at least one side of the lid, the opening frame projecting toward an inside of the container body from the at least one side of the lid and forming an opening, and wherein the barrier material may be mounted on an inner side of the opening frame.

In some embodiments, a mesh sheet may be mounted on at least one side of the opening frame on an outer side thereof.

In some embodiments, the container body may include a fastener for securing the item to be stored that is disposed in the storage space.

The embodiments of the present disclosure will be described below with reference to the drawings. Like elements are given like reference signs in the description of the drawings, and redundant explanation has been omitted.

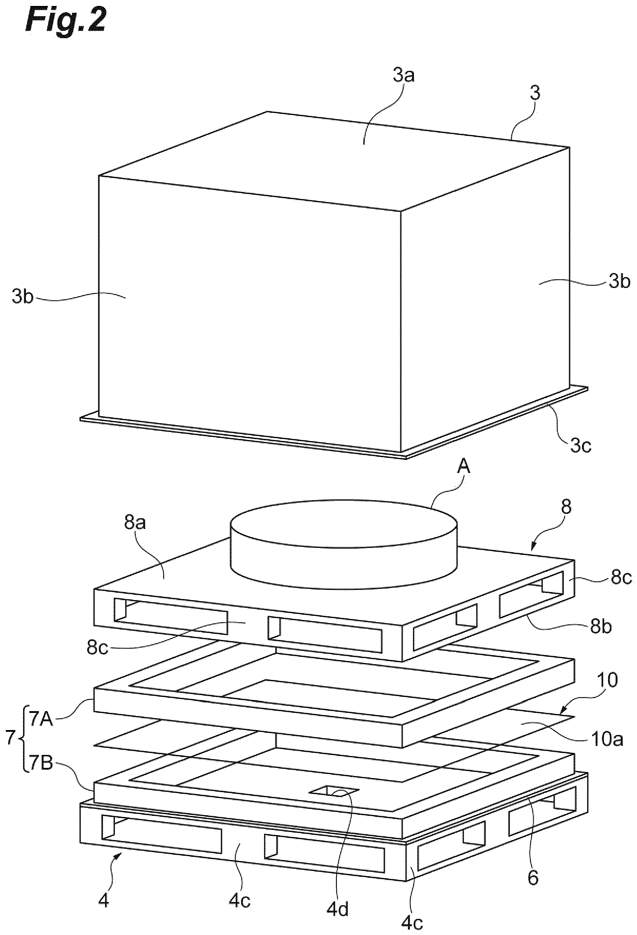

A rust-proof storage container 1 according to a first embodiment will first be described with reference to FIGS. 1 to 3. As shown in FIGS. 1 and 2, the rust-proof storage container 1 is a housing container for storing or transporting a tool A, which is an item to be stored. The rust-proof storage container 1 inhibits corrosion such as of a metal material or a metal product when storing it for an extended period of time (for example, from six months to a few years). The tool A shown in FIG. 2 is merely an example. An article that may be stored or transported by the rust-proof storage container 1 may be of any material or any shape. The size of the rust-proof storage container 1 is not limited in particular and may be changed as appropriate according to the size of the article to be stored. That is, any configuration that satisfies the description below is capable of exhibiting the rust-proofing properties as the rust-proof storage container 1. This rust-proof storage container 1 does not require the tool A or the like to be subjected to rust-proof treatments (i.e., such as application of a rust preventive oil, wrapping with a plastic sheet, or packaging). The rust-proof storage container 1 may be placed indoors or outdoors. The tool A is, for example, a jig used in the production of machine parts. A machine, a machine part, a material or other items may be housed instead of the tool A.

The rust-proof storage container 1 includes a container body 2 for housing the tool A. The container body 2 is a rectangular storage box. The container body 2 defines a storage space S1 (see, FIG. 3A) therein. The rust-proof storage container 1 includes a base 4 that forms a bottom of the rust-proof storage container 1 and a rectangular lid 3 provided on the base 4.

The base 4 may be, for example, a palette. The base 4 is rectangular-parallelepiped-shaped having a predetermined thickness and includes a first plate portion 4a that forms a top surface, a second plate portion 4b that forms a bottom surface, and a plurality of column portions 4c that connects the first plate portion 4a to the second plate portion 4b. The first plate portion 4a and the second plate portion 4b, for example, extend horizontally and are parallel to each other. The second plate portion 4b of the base 4 faces an outer space S2. The base 4 has one or a plurality of vertically penetrating through holes 4d (only one central through hole 4d is shown in the drawings). The through hole 4d communicates the inside and the outside of the container body 2. The base 4 may be made, for example, of resin or of metal such as aluminum.

The lid 3 is an opaque box made from a material having excellent weather resistance. In other words, the lid 3 can be maintained by a simple touch-up maintenance even when left outdoors for 10 years or longer. The lid 3 is formed such that only the bottom surface of the six surfaces of the rectangular parallelepiped is opened. The lid 3 includes one top surface 3a and four side surfaces 3b. The top surface 3a connects upper ends of the four side surfaces 3b. The lid 3 defines the storage space S1. A horizontally projecting flange 3c is formed on lower ends of the four side surfaces 3b. The flange 3c is peripherally formed along an entire perimeter of a lower end portion of the lid 3. The lid 3 may be made, for example, of metal such as aluminum.

As shown in FIGS. 3A and 3B, a peripheral sealing member 6 is provided between the flange 3c of the lid 3 and a peripheral portion of the first plate portion 4a of the base 4. A surface 6a of the sealing member 6 is adhered to the flange 3c to keep the container body 2 airtight. As shown in FIG. 3B, the sealing member 6 may have a groove 6b that is recessed from the surface 6a. The groove 6b may be peripherally formed. The groove 6b may have a string-like sealing material 16. The sealing material 16 may be made, for example, of silicone. The sealing material 16 may be a jelly-like viscous gel. It should be noted that a string-like sealing material may be provided between the flange 3c and the base 4 instead of the sealing member 6 and the sealing material 16.

The lid 3 is only mounted on the base 4 by its own weight and there are no bolts and nuts, or the like on the flange 3c. In the rust-proof storage container 1, the lid 3 can be opened and closed very easily. It should be noted that the lid 3 may be fixed to the base 4 using fastening means such as bolts and nuts.

The lid 3 can be double-stacked. The rust-proof storage container 1 has enough strength to withstand the load of another rust-proof storage container 1 that houses the tool A. That is, the lid 3 has enough strength to withstand such load. Multiple stacking of the rust-proof storage container 1 allows for efficient use of space.

The container body 2 includes a frame 7 provided on the base 4 and a palette (mount) 8 provided on the frame 7. That is, the frame 7 and the palette 8 are provided so as to be stacked on the base 4 and are disposed inside the lid 3. The frame 7 is provided between the base 4 and the palette 8.

The palette 8 is, for example, the same shape as the base 4 and is slightly smaller than the base 4. That is, the palette 8 has an external shape that is smaller than the perimeter of the inner peripheral surface of the lid 3. The palette 8 has a flat rectangular parallelepiped shape having a predetermined thickness and includes a first plate portion 8a that forms a top surface, a second plate portion 8b that forms a bottom surface, and a plurality of column portions 8c that connects the first plate portion 8a to the second plate portion 8b. The first plate portion 8a and the second plate portion 8b, for example, extend horizontally and are parallel to each other. The tool A is placed on the first plate portion 8a. The first plate portion 8a of the palette 8 faces the storage space S1. The palette 8 has one or a plurality of vertically penetrating through holes 8d (only one central through hole 8d is shown in the drawings). The palette 8 may be made, for example, of resin or of metal such as aluminum.

The frame 7 includes a first frame 7A on a side toward the palette 8 and a second frame 7B on a side toward the base 4. The first frame 7A and the second frame 7B may be shaped, for example, as rectangular loops with each side being formed with a hollow rectangular-shaped material. The first frame 7A and the second frame 7B are the same members having the same size and being made from the same material. The first frame 7A and the second frame 7B are vertically stacked and define the space of an inner space 7C. The inner space 7C has a predetermined height that is equivalent to the thickness of the first frame 7A plus the thickness of the second frame 7B. The frame 7 may have an external shape that is, for example, substantially the same as the external shape of the palette 8 or smaller than the external shape of the palette 8. The frame 7 may be made, for example, of resin or of metal such as aluminum.

The base 4, the frame 7, and the palette 8 are adhered. A sealing material may be provided as appropriate therebetween or may not be provided. The one or the plurality of through holes 4d of the base 4, the inner space 7C of the frame 7, and the one or the plurality of through holes 8d of the palette 8 described above are vertically adjoined. By being adjoined, the through hole 4d, the inner space 7C, and the through hole 8d form a passage 20 of the container body 2. The passage 20 is provided between the storage space S1 and the outer space S2 and connects the storage space S1 to the outer space S2 with a barrier material 10 interposed therebetween.

A gap may be formed between the frame 7 and palette 8, and the side surfaces 3b of the lid 3. It should be noted that at least one of the frame 7 and the palette 8 may be in contact with the side surfaces 3b of the lid 3. Additionally, some amount of drying agent may be placed inside the storage space S1. The drying agent is effective for removing moisture initially present inside the container body 2 (or the storage space S1). The amount of the drying agent can be changed according to, for example, the temperature or climate of the area in which the rust-proof storage container 1 is to be stored or the season in which the rust-proof storage container 1 is to be stored.

As shown in FIGS. 2 and 3A, the rust-proof storage container 1 includes the barrier material 10 that is provided so as to seal the passage 20. More specifically, the barrier material 10 is a thin rectangular sheet-like resin material that has flexibility. The barrier material 10 is formed of a material including, for example, polyethylene terephthalate (PET) and biaxially oriented polypropylene (OPP). The barrier material 10 may be a laminate in which, for example, a polyethylene film is laminated on a PET film. The barrier material 10 may be a coated body being an OPP film coated with resin (for example, PVDC i.e. polyvinylidene fluoride).

The barrier material 10 preferably has a very low moisture permeability. The barrier material 10 may have a moisture permeability, for example, of 10 (g/(m²·d)) or less. The barrier material 10 may have a moisture permeability of 5 (g/(m²·d)) or less, or 3 (g/(m²·d)) or less. The barrier material 10 preferably has a moisture permeability of 1 (g/(m²·d)) or less, and most preferably 0 (g/(m²·d)). Although the thickness of a center portion 10b is not particularly limited, it may be, for example, about 10 to 30 µm.

A peripheral portion 10a of the barrier material 10 is retained by the frame 7. More specifically, the marginal peripheral portion 10a of the barrier material 10 is sandwiched between the first frame 7A and the second frame 7B. A fixing means such as an adhesive may or may not be provided between the peripheral portion 10a and the first frame 7A and between the peripheral portion 10a and the second frame 7B. The barrier material 10 may be retained by frictional resistance between the peripheral portion 10a and the first frame 7A and between the peripheral portion 10a and the second frame 7B. Thus, the peripheral portion 10a of the barrier material 10 is fixed all around a periphery of the inner space 7C (passage 20). In other words, a sealing fixing part 13 is formed by the first frame 7A and the second frame 7B. The barrier material 10 is thus securely retained by the frame 7 and does not move relative to the frame 7 or become dislodged from the frame 7.

The center portion 10b of the barrier material 10 excluding the peripheral portion 10a is larger than a cross section of the passage 20, that is, in this case, larger than a horizontal cross section of the inner space 7C. This center portion 10b is disposed in the inner space 7C of the frame 7 and has a certain degree of slackness. The center portion 10b is thus vertically movable (i.e., deformable) in the inner space 7C. The center portion 10b has a first surface 11, which is the surface facing the storage space S1 (i.e., facing the palette 8) and a second surface 12, which is the surface opposite the first surface 11 (i.e., facing the base 4). The first surface 11 can receive a first atmospheric pressure of the storage space S1 via the through hole 8d. The second surface 12 can receive a second atmospheric pressure of the outer space S2 via the through hole 4d.

The barrier material 10 of the rust-proof storage container 1 balances the first atmospheric pressure, which is an internal pressure and the second atmospheric pressure, which is an external pressure. The surrounding environment (in particular, the temperature) of the rust-proof storage container 1 can vary according to the time of day (day or night) or the season. The pressure of the storage space S1 can change about 15% with changes in the temperature. The barrier material 10 prevents air (in particular, air containing moisture) from being sucked into the lid 3 by balancing the internal and external pressures, that is, by relieving a pressure difference. In other words, a pressure balancing device is formed by the frame 7, the barrier material 10, and the sealing fixing part 13 that are provided in the passage 20 between the outer space S2 and the storage space S1.

This is described in detail below with reference to FIGS. 4 and 5. FIG. 4 is a cross-sectional view of the rust-proof storage container 1 showing the barrier material 10 when the temperature is low (that is, for example, during night time or winter). As shown in FIG. 4, when the temperature is low, the internal first atmospheric pressure is lower than the external second atmospheric pressure, so that a pressure difference is created. The barrier material 10 expands inside the inner space 7C toward the palette 8 in response to this pressure difference. That is, the barrier material 10 expands such that the first surface 11 is an outer surface of a curve. This deformation of the barrier material 10 relieves the pressure difference and prevents external moist air from entering inside the lid 3.

FIG. 5 is a cross-sectional view of the rust-proof storage container 1 showing the barrier material 10 when the temperature is high (that is, for example, during day time or summer). As shown in FIG. 5, when the temperature is high, the internal first atmospheric pressure is higher than the external second atmospheric pressure, so that a pressure difference is created. The barrier material 10 expands inside the inner space 7C toward the base 4 in response to this pressure difference. That is, the barrier material 10 expands such that the second surface 12 is the outer surface of the curve. This deformation of the barrier material 10 relieves the pressure difference.

According to the rust-proof storage container 1 of the first embodiment, the tool A is stored in the storage space S1 of the container body 2. The passage 20 formed in the container body 2 is sealed by the barrier material 10. The sheet-like barrier material 10 is flexible and has an area greater than the cross-sectional area of the passage 20, so that the center portion 10b is deformable inside the passage 20. That is, the center portion 10b of the barrier material 10 deforms in response to the pressure difference between the first atmospheric pressure and the second atmospheric pressure. Deformation of the barrier material 10 relieves this pressure difference. The relieved pressure difference helps, for example, to prevent inflow of moist air existing in the outer space S2 into the inner storage space S1. That is, the so-called respiratory phenomenon is relieved. This rust-proof storage container 1 inhibits (and blocks) moisture infiltration and thereby eliminates the need for rust-proof treatments such as application of a rust preventive oil to the metal material or the like. Thus, maintainability is improved. Moreover, gas tightness is achieved by providing the passage 20 of the container body 2 with the barrier material 10, so that the rust-proof storage container 1 has a simple configuration. The rust-proof storage container 1 is effective not only for storing but also for transporting, for example, the metal material or the metal product.

The rust-proof storage container 1 is suitable, in particular, for storing and transporting a metal part that requires to be protected from rusting. The rust-proof storage container 1 may be maintenance free, for example, for about a year. In addition, the rust-proof storage container 1 can be stored outdoors.

The frame 7 and the palette 8 are formed on the base 4 and the tool A is placed on the palette 8. The passage 20 that connects the inside with the outside is formed in the base 4, the frame 7, and the palette 8, and the center portion 10b of the barrier material 10 deforms in the inner space 7C of the frame 7. To use the tool A again, the lid 3 is opened and the tool A is taken out. Thus, the removal of the tool A is facilitated. Furthermore, for example, two or more of the rust-proof storage containers 1 can be stacked due to the top surface 3a of the lid 3 being flat, thereby helping to save space.

It should be noted that a test device having the same configuration as the rust-proof storage container 1 was actually made and subjected to accelerated testing in which the temperature and the humidity were repeatedly changed (32 cycles, which is equivalent to a month). As a result of the test, the humidity inside the test device was maintained at less than 40%. A humidity of 40% is said to be a rusting limit. The test device having the same configuration as the rust-proof storage container 1 was found to exhibit sufficient rust-proofing properties.

Next, a rust-proof storage container 1A of a second embodiment will be described with reference to FIGS. 6 and 7. The rust-proof storage container 1A is different from the rust-proof storage container 1 in that it has a container body 2A which has an opening 3e formed on a side surface 3b instead of the container body 2 with the passage 20. The rust-proof storage container 1A has one or a plurality of the openings 3e formed on at least one side surface 3b of a lid 3A. A barrier material 10A is necessarily provided where the opening 3e is formed. The barrier material 10A is, for example, bag-shaped. That is, the barrier material 10A is a sheet-like resin material formed in a bag shape. A center portion 10b of the barrier material 10A is disposed inside the container body 2A and has a certain degree of slackness. It should be noted that although a base 4 has a through hole 4d, a planar member 18 is formed between the lid 3A and the base 4, so that an upper end opening of the through hole 4d is closed by the planar member 18. Thus, the base 4 does not have a passage that connects the inner and outer spaces.

The lid 3A is only mounted on the base 4 by its own weight and there are no bolts or nuts, or the like on a flange 3c. In the rust-proof storage container 1A, the lid 3 can be opened and closed very easily. It should be noted that the lid 3A may be fixed to the base 4 using fastening means such as bolts and nuts.

The lid 3A can be double-stacked. The rust-proof storage container 1A has enough strength to withstand the load of another rust-proof storage container 1A that houses a tool A. That is, the lid 3A has enough strength to withstand such load. Multiple stacking of the rust-proof storage container 1A allows for efficient use of space.

A peripheral portion 10a, that is, an opening end portion of the barrier material 10A is, as shown in FIGS. 7A and 7B, fixed to the side surface 3b all around a periphery of the opening 3e. The peripheral portion 10a of the barrier material 10A is fixed by an inner frame material 41 that is attached to an inner surface of the side surface 3b, a pressing outer frame material 42 that is attached to an outer surface of the side surface 3b, and a plurality of screws 43. A peripheral rubber sealing material 44 may be provided between the outer frame material 42 and the side surface 3b. A sealing fixing part 40 is formed by the inner frame material 41, the outer frame material 42, the screws 43, and the sealing material 44.

In addition, the opening 3e has a box 30 (see also FIG. 8) attached thereto. The box 30 includes a top plate 31, a bottom plate (plate) 33 opposite the top plate 31, and a pair of side plates 32 that vertically connects the top plate 31 to the bottom plate 33. The top plate 31, the side plates 32, and the bottom plate 33 have, on base end sides (sides facing an outer space S2) thereof, a flange 34 that extends perpendicular to the plates. A rectangular tube formed by the top plate 31, the side plates 32, and the bottom plate 33 has a size that corresponds to the opening 3e. The peripheral flange 34 is fixed to the periphery of the opening 3e. The box 30 may be made, for example, of resin or of metal such as aluminum.

The bottom plate 33 extends longer than the top plate 31 and the side plates 32. In other words, the bottom plate 33 protrudes into a storage space S1 more than do the top plate 31 and the side plates 32. The bottom plate 33 extends horizontally. The box 30 exists inside the lid 3A between the storage space S1 and the barrier material 10A. The center portion 10b of the barrier material 10A has a size (area) capable of protruding more toward the storage space S1 than the top plate 31 and the side plates 32. The barrier material 10A expands toward the storage space S1 through a hollow portion of the box 30. In other words, in the rust-proof storage container 1A, a first surface 11 of the center portion 10b of the barrier material 10A is exposed to the storage space S1 and defines the storage space S1. In the opening 3e, there is nothing on a second surface 12 side of the barrier material 10A. Thus, the second surface 12 of the center portion 10b is exposed to the atmosphere of the outer space S2.

It should be noted that the opening 3e may have a protective cover 25. The protective cover 25 covers the opening 3e but does not seal the opening 3e. There is a gap between the protective cover 25 and the side surface 3b so that outside air can easily approach the second surface 12 of the barrier material 10A. That is, the second surface 12 receives a second atmospheric pressure. The protective cover 25 may be hung on the side surface 3b or may be attached to the side surface 3b via hinges. A mesh sheet such as wire netting or perforated metal may be used instead of the protective cover 25. In this case, the wire netting, the perforated metal, or the like may be fixed to the opening 3e.

In the rust-proof storage container 1A, a pressure balancing device is formed by the barrier material 10 and the sealing fixing part 40 which are provided on the opening 3e between the outer space S2 and the storage space S1.

The rust-proof storage container 1A also achieves the same operation and effect as those of the rust-proof storage container 1. That is, as shown in FIG. 9, when the temperature is low, an internal first atmospheric pressure is lower than the external second atmospheric pressure, so that a pressure difference is created. The barrier material 10A expands toward the storage space S1 in response to this pressure difference. That is, the barrier material 10A expands such that the first surface 11 is an outer surface of a curve. This deformation of the barrier material 10A relieves the pressure difference to prevent external moist air from entering inside the lid 3A. As shown in FIG. 10, when the temperature is high, the internal first atmospheric pressure is higher than the external second atmospheric pressure, so that a pressure difference is created. The barrier material 10A expands toward the opening 3e inside the lid 3A in response to this pressure difference. That is, the barrier material 10A expands such that the second surface 12 is the outer surface of the curve. This deformation of the barrier material 10A relieves the pressure difference.

The rust-proof storage container 1A inhibits (and blocks) moisture infiltration and thereby eliminates the need for rust-proof treatments such as application of a rust preventive oil to a metal material or the like. Thus, maintainability is improved. Moreover, gas tightness is achieved by providing the opening 3e of the container body 2A with the barrier material 10A, so that the rust-proof storage container 1A has a simple configuration. The rust-proof storage container 1A is effective not only for storing but also for transporting, for example, a metal material or a metal product.

The opening 3e is provided on at least one side surface 3b of the lid 3A. The center portion 10b of the barrier material 10A that expands toward the storage space S1 is deformable inside the storage space S1. To use the tool A again, the lid 3A is opened and the tool A is taken out. Thus, the removal of the tool A is facilitated. Since the barrier material 10A expands and contracts laterally, it is less prone to gravitational effects and thereby facilitates the relieving of the pressure difference described above. Since the barrier material 10A is disposed inside the storage space S1, the barrier material 10A may be large and the amount of deformation can be increased. Thus, the range of the pressure difference that can be relieved is increased. A bag-shaped barrier material 10A can also be used. Furthermore, for example, two or more of the rust-proof storage containers 1A can be stacked due to a top surface 3a of the lid 3A being flat, thereby helping to save space.

The bottom plate 33 is capable of supporting the center portion 10b of the barrier material 10A that expands toward the storage space S1. In a case in which the bottom plate 33 is disposed between the tool A and the barrier material 10A and in which the opening 3e is provided, the bottom plate 33 contributes to appropriate deformation of the barrier material 10A.

A rust-proof storage container 1B of a third embodiment will be described with reference to FIG. 11. The rust-proof storage container 1B is different from the rust-proof storage container 1A in that it has an opening frame 50 projecting inward (toward a storage space S1) into a container body 2B by a predetermined thickness L. The opening frame 50 is, for example, a rectangular frame formed on an opening on a side of a lid 3B. A barrier material 10B is mounted on an inner side of the opening frame 50. A mounting surface of the barrier material 10B is thus shifted inward of the container body 2B compared to the rust-proof storage container 1A. The barrier material 10B is disposed inside the container body 2B and has a certain degree of slackness. As shown in FIG. 11, the opening frame 50 secures an expansion space for the barrier material 10B by having the thickness L. In this case, the expansion space corresponds to the thickness L of the opening frame 50. The "expansion space" refers to clearance for the barrier material 10B to expand.

The opening frame 50 may function as a strength member of the container body 2B. The area and the number of the openings, the thickness L (corresponding to the expansion space described above) of the opening frame 50, the size of the barrier material 10B, and other configurations can be determined by taking into consideration the climate of the region in which the rust-proof storage container 1B is to be used and the strength of the rust-proof storage container 1B. It should be noted that the barrier material 10B may be fixed by substantially the same structure as that of the second embodiment. More specifically, the side surface 3b of the second embodiment would be the opening frame 50 and the barrier material 10B would be fixed without the top plate 31.

A mesh sheet 51 such as wire netting or perforated metal may be fixed to the opening of the container body 2B. The mesh sheet 51 is mounted on an outer surface (a side facing an outer space S2) of the opening frame 50. The mesh sheet 51 is mounted in a manner that does not impair the airtightness of the rust-proof storage container 1B. The mesh sheet 51 protects the barrier material 10B. The barrier material 10B may also be protected using the box 30 of the second embodiment.

The container body 2B may include a fastener 60 for securing a tool A. The fastener 60 may, for example, include a metal or fabric belt. The fastener 60 may be a metal frame. The fastener 60 is a part of the container body 2B. The fastener 60 includes, for example, a metal fitting attached to a planar member 18 of a base 4 and a retaining member connected to the metal fitting. In a case in which the fastener 60 includes a belt, the belt is the retaining member. The fastener 60 has a size that is adjustable according to the size of the tool A, which is an item to be stored. For example, in the case in which the fastener 60 includes a belt, the length of the belt is adjustable. The fastener 60 may be attached to the base 4 or may be attached to the lid 3B. According to the fastener 60, since the tool A is secured, damages or the like of the tool A caused by vibrations or tilting can be prevented. The fastener 60 enables reliable transportation and shipping of the tool A. The fastener 60 provides advantages when transporting the entire rust-proof storage container 1B.

The rust-proof storage container 1B also achieves the same operation and effect as those of the rust-proof storage containers 1 and 1A.

Although the embodiments of the present disclosure have been described above, the present invention is not limited thereto. In the rust-proof storage container 1 of the first embodiment, an opening may be formed on the container body 2 (for example, on the lid 3) instead of the passage 20. In that case, the peripheral portion 10a of the barrier material 10 would be fixed all around the periphery of the opening. In the rust-proof storage container 1A of the second embodiment, a passage may be formed in the container body 2A (for example, in the side surface 3b of the lid 3A) instead of the opening 3e. In that case, the peripheral portion 10a of the barrier material 10A would be fixed all around the periphery of the passage. The container body may take different configurations as appropriate according to the metal material or the like to be stored. The configuration of each part of the rust-proof storage container can be changed according to, for example, the location, the area, or the climate in which the rust-proof storage container is to be stored. The fastener 60 may be provided in the rust-proof storage container of the first embodiment or the second embodiment. The fastener 60 would be a part of the container body 2 or 2A. The fastener 60 may be attached to the palette (mount) 8 of the container body 2.

### Industrial Applicability

According to some embodiments of the present disclosure, a rust-proof storage container that has a simple configuration and has improved maintainability is provided.

### Reference Signs List

- 1: Rust-proof storage container

- 1A: Rust-proof storage container
- 1B: Rust-proof storage container
- 2: Container body
- 2A: Container body
- 2B: Container body
- 3: Lid
- 3A: Lid
- 3B: Lid
- 3e: Opening
- 4: Base
- 4d: Through hole
- 7: Frame
- 7A: First frame
- 7B: Second frame
- 7C: Inner space
- 8: Palette (mount)
- 10: Barrier material
- 10A: Barrier material
- 10B: Barrier material
- 10a: Peripheral portion
- 10b: Center portion
- 11: First surface
- 12: Second surface
- 13: Sealing fixing part
- 20: Passage
- 25: Protective cover
- 30: Box
- 33: Bottom plate (plate)
- 34: Flange
- 40: Sealing fixing part
- 50: Opening frame
- 51: Mesh sheet
- 60: Fastener
- A: Tool
- S1: Storage space
- S2: Outer space

## Claims

1. A rust-proof storage container comprising:
a container body defining a storage space and having a passage or an opening between the storage space and an outer space; and
a barrier material provided so as to seal the passage or the opening and having an area greater than a cross-sectional area of the passage or an area of the opening, the barrier material being sheet-like and having flexibility,
wherein a peripheral portion of the barrier material is fixed all around a periphery of the passage or a periphery of the opening, and airtightness of the storage space is maintained by the barrier material, and
wherein a center portion of the barrier material includes a first surface being a surface facing the storage space and receiving a first atmospheric pressure of the storage space and a second surface being a surface opposite the first surface and receiving a second atmospheric pressure of the outer space.

2. The rust-proof storage container according to claim 1, wherein the container body includes:
a base facing the outer space;
a lid provided on the base and defining the storage space;
a mount provided inside the lid on the base and facing the storage space; and
a frame provided between the base and the mount,
wherein the passage of the container body is formed by communication between a through hole in the base, an inner space of the frame, and a through hole in the mount, and
wherein the peripheral portion of the barrier material is retained by the frame, and the center portion of the barrier material is disposed in the inner space of the frame.

3. The rust-proof storage container according to claim 1, wherein the container body includes:
a base facing the outer space and the storage space; and
a lid provided on the base and defining the storage space,
wherein the passage or the opening of the container body is provided on at least one side of the lid, and
wherein the peripheral portion of the barrier material is fixed to the at least one side of the lid, and the center portion of the barrier material is expanded toward the storage space inside the lid.

4. The rust-proof storage container according to claim 3, wherein the opening is provided on the at least one side of the lid, and the periphery of the opening has a plate fixed thereto, the plate protruding toward the storage space from a lower side of the periphery.

5. The rust-proof storage container according to claim 1, wherein the container body includes:
a base facing the outer space and the storage space; and
a lid provided on the base and defining the storage space,
wherein an opening frame is provided on at least one side of the lid, the opening frame projecting toward an inside of the container body from the at least one side and forming the opening, and
wherein the barrier material is mounted on an inner side of the opening frame.

6. The rust-proof storage container according to claim 5, wherein a mesh sheet is mounted on the at least one side of the lid on an outer side of the opening frame.

7. The rust-proof storage container according to any one of claims 1 to 6, wherein the container body includes a fastener for securing an item to be stored disposed in the storage space.
